# EUROPÄISCHE PATENTSCHRIFT

(11) **EP 1 006 012 B1**
(45) Veröffentlichungstag und Bekanntmachung des Hinweises auf die Patenterteilung: **22.09.2004**
(21) Anmeldenummer: 99123660.5
(22) Anmeldetag: 29.11.1999
(51) Int. Cl.: B60J 7/00, B60J 1/20

(54) **Rolloanordnung für Fahrzeuge**
Roller blind for vehicle
Store enroulable pour véhicle

(30) Priorität: 01.12.1998 DE 19855354
(43) Veröffentlichungstag der Anmeldung: 07.06.2000
(73) Patentinhaber: Webasto Vehicle Systems International GmbH, 82131 Stockdorf (DE)
(72) Erfinder: Entenmann, Karin, 82152 Planegg (DE)
(74) Vertreter: Wiese, Gerhard

(56) Entgegenhaltungen:
- WO-A-96/01191
- US-A- 2 594 910
- US-A- 3 075 805

## Beschreibung

Die vorliegende Erfindung betrifft eine Rolloanordnung mit einer Rollobahn, die von einer Wickelrolle abwickelbar ist, um eine Öffnung zum Innenraum eines Fahrzeugs, insbesondere Kraftfahrzeuges, mindestens teilweise abzudecken, und die auf der Wickelrolle aufwickelbar ist, um die Öffnung zumindest teilweise freizugeben, wobei die Rollobahn in Querrichtung mit Spriegeln versehen ist und an ihrem vorderen Ende einen Zugspriegel aufweist, und wobei die Spriegel jeweils seitlich in Führungsbahnen geführt sind und für eine Wölbung der Rollobahn in Querrichtung sorgen. Des weiteren betrifft die vorliegende Erfindung ein Fahrzeugdach mit einer derartigen Rolloanordnung.

Rolloanordnungen der eingangs genannten Art werden beispielsweise in Kraftfahrzeugen benutzt, bei welchen in einer festen Dachfläche eine Dachöffnung vorgesehen ist, die mittels eines transparenten Deckels verschlossen bzw. verschließbar ist. Die Rolloanordnung ist hierbei unterhalb der Dachöffnung angeordnet, um den Lichteinfall durch die Dachöffnung regulieren zu können. Die Anwendung derartiger Rolloanordnungen ist jedoch nicht auf Fahrzeugdächer beschränkt. Vielmehr können solche Rolloanordnungen in gleicher Weise bei Fenstern oder sonstigen vom Fahrgastraum abzutrennenden Abteilen eingesetzt werden, beispielsweise um eine Schlafkabine oder ein Hochdach vom Fahrgastraum abzutrennen. Um die Beschreibung der erfindungsgemäßen Rolloanordnung zu vereinfachen, wird im folgenden ausschließlich auf Fahrzeugdächer Bezug genommen.

Bei früheren Rolloanordnungen wurden ebene Rollobahnen eingesetzt, bei welchen die Rollobahn mittels eines an ihrer Vorderkante angebrachten steifen Zugspriegels über die Dachöffnung gespannt wurde. Um einerseits die Rollobahn zu versteifen und so ein Durchhängen derselben zu vermindern, und andererseits bei einem in Fahrzeuglängsrichtung gewölbten Fahrzeugdach den Kopfraum unterhalb der Rolloanordnung nicht durch eine zwischen der Wickelrolle und dem Zugspriegel gespannte Rollobahn einzuschränken, wird die Rollobahn vorteilhafterweise mit Spriegeln versehen, die seitlich in Führungsbahnen geführt sind. Da Fahrzeugdächer im allgemeinen jedoch nicht nur in Fahrzeuglängsrichtung sondern auch in Fahrzeugquerrichtung gewölbt sind, ist es zwecks optimaler Ausnutzung des in der Fahrgastkabine zur Verfügung stehenden Raumes wünschenswert, über eine Rolloanordnung zu verfügen, bei der für eine Wölbung der Rollobahn in Fahrzeugquerrichtung gesorgt ist.

In WO-A-96/01191 ist eine Rolloanordnung der eingangs genannten Art beschrieben, bei welcher der Abstand der Führungsbahnen, in welchen die Spriegel geführt sind, so gewählt ist, daß er nahe der Wickelrolle der Länge der Spriegel entspricht, sich jedoch dann in einem Übergangsbereich mit zunehmendem Abstand von der Wickelrolle verkürzt, so daß die Spriegel beim Passieren des Übergangsbereichs quer zur Rollobahn gewölbt werden. Ein Hauptnachteil dieser Lösung besteht darin, daß zwischen den Spriegeln und den Führungsbahnen inhärent hohe Reibungskräfte auftreten. Ein weiterer Nachteil liegt in der Toleranzempfindlichkeit einer derartigen Konstruktion, die sich daraus ergibt, daß insbesondere beim Einsatz der Rolloanordnung bei Fahrzeugdächern nur eine relativ geringe Wölbung in Fahrzeugquerrichtung erzeugt werden soll. Je größer jedoch der zu überspannende Wölbungsradius ist, desto größer ist das Verhältnis der Wölbungshöhe zur Verengung der Führungsbahnen und desto enger sind die für eine spezielle gewünschte Rolloquerwölbung einzuhaltenden Toleranzen sowohl bei der Fertigung als auch beim Einbau der die sich verengenden Führungsbahnen aufweisenden Profilbauteile.

In JP-A-63-258213 ist ein weiterer Lösungsversuch für die oben erläuterte Problematik beschrieben. Hierbei ist die Rollobahn in Querrichtung mit Spriegeln versehen, die aus einem federnden Werkstoff gefertigt sind und die im entspannten Zustand eine Wölbung entsprechend der gewünschten Rolloquerwölbung aufweisen. Um dennoch die Rollobahn platzsparend auf eine Wickelrolle aufwickeln zu können, ist ein Niederhalteblech vorgesehen, um die Spriegel beim Aufwickeln auf die Wickelrolle gerade zu biegen. Aufgrund der beim Geradebiegen der Spriegel inhärent auftretenden hohen Reibungsverluste ist bei diesem Konstruktionsansatz für das Aufwickeln der Rollobahn auf die Wickelrolle ein separater Rückzugsmotor erforderlich, was aus mehreren Gründen, wie z.B. Platzbedarf, Montageaufwand, Kosten, etc., nachteilig ist.

In Anbetracht der bei den bekannten Rolloanordnungen auftretenden Probleme ist es eine Aufgabe der vorliegenden Erfindung, eine Rolloanordnung der eingangs genannten Art zu schaffen, die einfacher und kostengünstiger zu fertigen und zu montieren ist.

Diese Aufgabe wird bei einer Rolloanordnung der eingangs genannten Art dadurch gelöst, daß zwischen den Führungsbahnen mindestens eine Ausstellführung vorgesehen ist, die in Abstand zu einer quer durch die Führungsbahnen verlaufenden Fläche verläuft und so angeordnet ist, daß die Rollobahn bei einem Eingriff der Spriegel mit der Ausstellführung in Querrichtung gewölbt wird. Bei der erfindungsgemäßen Ausgestaltung der Rolloanordnung wird somit die Wölbung der Spriegel und damit der Rollobahn dadurch bewirkt, daß die Seitenränder der Rollobahn aufgrund der mit der Rollobahn verbundenen Spriegel entlang den Führungsbahnen festgelegt sind, während auf einen zwischen den Führungsbahnen befindlichen Teil der Rollobahn mittels der zwischen den Führungsbahnen in Abstand zu der quer durch die Führungsbahnen verlaufenden Fläche angeordneten Ausstellführung eine Kraft lotrecht zur Rollobahn aufgebracht wird. Die erfindungsgemäße Lösung ist weniger toleranzempfindlich und erzeugt weniger Reibung als die aus dem Stand der Technik bekannten Rolloanordnungen.

Weitere Ausgestaltungen der Erfindung ergeben sich aus den Unteransprüchen.

Soll an den Rändern der Rollobahn ein anderer Wölbungsverlauf in Längsrichtung der Rollobahn erreicht werden als in einem zwischen den Führungsbahnen liegenden Bereich der Rollobahn, so kann dies dadurch erreicht werden, daß die Ausstellführung mit einer anderen Wölbung als die Führungsbahnen versehen wird.

Um die Reibungsverluste beim Wölben der Rollobahn weiter zu verringern, kann die Ausstellführung an ihrem der Wickelrolle zugewandten Ende eine Rampe aufweisen, auf welche die Spriegel beim Abwickeln der Rollobahn auflaufen. Die Rampe stellt dann einen Biegebereich dar, in welchem der jeweilige mit der Rampe in Eingriff tretende Spriegel ausgehend von dem geraden Zustand des Spriegels auf der Wickelrolle graduell auf die gewünschte Wölbung gebogen wird.

Während Ausführungsformen der erfindungsgemäßen Rolloanordnung mit nur einer Ausstellführung sich insbesondere für Anwendungen eignen, bei welchen die Öffnung zum Innenraum des Fahrzeugs ohnehin geteilt ist, z.B. bei einem Fahrzeugdach, welches zwei durch einen in Fahrzeuglängsrichtung verlaufen Mittelsteg getrennte Dachöffnungen aufweist, kann es von Vorteil sein, wenn zwei Ausstellführungen benachbart den Führungsbahnen vorgesehen sind, so daß die Öffnung zum Innenraum des Fahrzeugs, die mittels der Rollobahn verdeckt bzw. freizugeben ist, nicht durch eine die Öffnung durchquerende Ausstellführung beeinträchtigt wird.

Soll der Zugspriegel nicht auf die Wickelrolle mit aufgewickelt werden, was in den meisten Anwendungsfällen der erfindungsgemäßen Rolloanordnung der Fall sein wird, läßt sich die beim Verfahren der Rollobahn auftretende Reibung weiter vermindern, wenn der Zugspriegel derart vorgewölbt ist, daß er beim Verfahren der Rollobahn nicht in Eingriff mit der Ausstellführung tritt.

Sind desweiteren die Positionen der Spriegel mit Bezug auf die Rollobahn so gewählt, daß die Spriegel beim Aufwickeln der Rollobahn auf die Wickelrolle in unterschiedlichen Umfangspositionen liegen, läßt sich ein möglichst kleiner Durchmesser der aufgewickelten Rollobahn erreichen. Der Durchmesser der aufgewickelten Rollobahn läßt sich hierbei noch weiter verkleinern, wenn die Spriegel gewölbt sind, insbesondere wenn der Radius der vorgesehenen Wölbung der einzelnen Spriegel jeweils näherungsweise dem Abstand des Spriegels von der Achse der Wickelrolle im aufgewickelten Zustand der Rollobahn entspricht.

Spriegel, insbesondere Spriegel, die beim Aufwickeln der Rollobahn auf die Wickelrolle in Längsrichtung gerade Form haben, mit denen sich jedoch beim Abwickeln der Rollobahn von der Wickelrolle eine Wölbung der Rollobahn erreichen läßt, lassen sich auf mehrere unterschiedliche Arten bereitstellen. Gemäß einer Ausführungsform können die Spriegel aus einem flexiblen, federnden Werkstoff gefertigt sein. Gemäß einer weiteren Ausführungsform können die Spriegel jedoch auch mehrere verbundene Abschnitte aufweisen. Diese Abschnitt können desweiteren auch untereinander mittels eines Scharniers verbunden sein. Bei den Scharnieren kann es sich hierbei insbesondere um Filmscharniere handeln, die sich einerseits ohne großen Aufwand fertigen lassen und die dann, wenn in weiterer Ausgestaltung der Erfindung die Rollobahn in Querrichtung Taschen aufweist, in welche die Spriegel eingesteckt sind, das Einschieben der Spriegel in die Taschen erleichtern.

Entsprechend einer alternativen Ausführungsform ist die Rollobahn anstelle mit gelenkigen Spriegeln mit Spriegeln versehen, die mehrere untereinander nicht verbundene Abschnitte aufweisen und die in quer zur Rollobahn angeordnete Taschen eingesteckt sind, deren Querschnitt so gewählt ist, daß sich aufeinandertreffende Enden von einzelnen Abschnitten der Spriegel beim Verwölben des Rollos gegeneinander anlegen. Um ein Abrutschen von aufeinandertreffenden Enden auszuschließen, ist hierbei vorteilhafterweise der Querschnitt der Taschen so gewählt, daß er näherungsweise dem Querschnitt der Spriegel entspricht.

Um eine Verschmutzung der Taschen sowie, bei längeren Gebrauch der Rolloanordnung, eine Beschädigung derselben zu vermeiden, sind die Taschen vorzugsweise so angeordnet, daß sie einen Eingriff der Spriegel mit den Ausstellführungen nicht beeinträchtigen. Insbesondere kann hierbei die Breite der Rollobahn so bemessen sein, daß sie die Ausstellführungen überdeckt, wobei die Taschen an den Treffstellen zwischen den Spriegeln und den Ausstellführungen derart unterbrochen sind, daß sie einen Eingriff der Spriegel mit den Ausstellführungen nicht beeinträchtigen. Alternativ kann die Rolloanordnung jedoch auch so ausgelegt sein, daß die Länge der Taschen der Breite der Rollobahn entspricht, und die Breite der Rollobahn so bemessen ist, daß sie die Ausstellführungen nicht überdeckt.

Soll die Rolloanordnung mittels eines Antriebs, insbesondere mittels eines elektrischen Antriebs verfahrbar sein, so ist zweckmäßig ein drucksteifes Kabel vorgesehen, welches an den Zugspriegel angreift, um die Rollobahn zu verfahren.

Um die Reibung zwischen den Spriegeln und den Führungsbahnen zu verringern, können ferner die Enden der Spriegel mit Gleitschuhen versehen sein, wobei es hierbei besonders vorteilhaft ist, wenn die Gleitschuhe in der Richtung quer zu den Spriegeln einen zylindrischen Querschnitt aufweisen, da dann unabhängig von der Wölbung der Spriegel, d.h. unabhängig vom Winkel, unter welchem die Spriegel aus der Führungsbahn herausragen, für eine gleichmäßige Anlage der Gleitschuhe gegen die Führungsbahnen gesorgt ist. Vor allem ist kein Verdrehen der Schiene um die Längsachse nötig.

Wie bereits oben erwähnt wurde, kann die vorliegend beschriebene Rolloanordnung vorteilhaft in einem Fahrzeugdach vorgesehen werden.

Das Fahrzeugdach kann hierbei eine Führungsbahn aufweisen, durch welche sich ein drucksteifes Kabel erstreckt, das an den Zugspriegel angreift, um die Rollobahn zu verfahren. In vorteilhafter Ausgestaltung eines solchen Fahrzeugdaches dient die Führungsbahn ferner als Führungsbahn für die Spriegel. Hierbei hat die Führungsbahn vorzugsweise einen zylindrischen Querschnitt, wobei die Enden der Spriegel dann mit Gleitschuhen versehen sind, die gleichfalls einen zylindrischen Querschnitt haben.

Der Montageaufwand zum Anbringen der erfindungsgemäßen Rolloanordnung läßt sich reduzieren, wenn das Fahrzeugdach so ausgestaltet ist, daß die Führungsbahnen und die Ausstellführungen Teil eines einstückigen Profilbauteils sind.

Um das Einfädeln der Spriegelenden bzw. der auf die Enden der Spriegel aufgebrachten Gleitschuhe in die Führungsbahnen zu erleichtern, können die Führungsbahnen einen zu der Wickelrolle hin aufgeweiteten Bereich aufweisen.

Bevorzugte Ausführungsbeispiele der Erfindung werden im folgenden unter Bezugnahme auf die beiliegenden Zeichnungen im Detail beschrieben. Es zeigen:
- FIG. 1: einen schematische perspektivische Ansicht einer Rolloanordnung gemäß der vorliegenden Erfindung;
- FIG. 2: eine Schnittansicht durch den Endbereich eines in einem Profilbauteil geführten Spriegels der Rolloanordnung gemäß FIG. 1;
- FiG. 3: eine Schnittansicht durch den Endbereich eines in einem Profilbauteil geführten Spriegels gemäß einer weiteren Ausführungsform der Rolloanordnung nach FIG. 1;
- FIGN. 4 und 5: Ansichten ähnlich FIG. 2, wobei jedoch auf andere Weise als in FIG. 2 für eine Verwölbbarkeit der Spriegel gesorgt ist;
- FIG. 6: eine Schnittansicht durch eine Wickelrolle mit aufgewickelter Rollobahn,
- FiG. 7: eine Teilaufsicht auf ein Fahrzeugdach, bei welchem die vorliegend beschriebe Rolloanordnung eingesetzt wird,
- Fig. 8: eine perspektivische Teilansicht der Rolloführung im Bereich einer Rampe und
- Fig.9: eine Ansicht entsprechend Fig. 9 und dem Spriegel in seiner gebogenen Position.

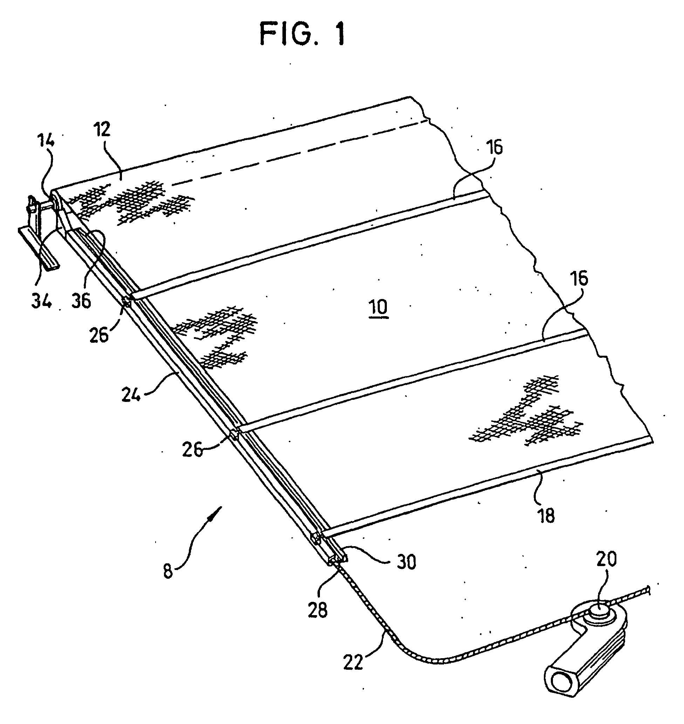

Bei der in FIG. 1 schematisch dargestellten insgesamt mit 8 bezeichneten Rolloanordnung ist eine Rollobahn 10 auf einer Wickelrolle 12 aufgenommen. Die Wickelrolle 12 ist seitlich in Drehlagern gelagert und vorzugsweise mittels einer Federanordnung 14 derart vorgespannt, daß die Rollobahn 10 selbsttätig auf die Wickelrolle 12 aufgewickelt wird, wenn keine weiteren Kräfte auf die Rollobahn einwirken. Die Rollobahn 10 ist in Querrichtung mit mehreren Spriegeln 16 versehen und weist an ihrem vorderen Ende einen Zugspriegel 18 auf. Die Spriegel sind vorzugsweise aus einem harten jedoch federnden Werkstoff gefertigt, wobei sie im entspannten Zustand gerade sind, um ein Aufwickeln der mit den Spriegeln 16 versehenen Rollobahn 10 auf die Wickelrolle 12 nicht zu beeinträchtigen. Der Zugspriegel 18 ist vorzugsweise als starres Bauteil ausgeführt und dient dazu, die Rollobahn entweder direkt von Hand oder, wie es in FIG. 1 gezeigt ist, mittels eines Antriebsmechanismus 20, der vorzugsweise einen Motor aufweist, zu verfahren. Hierbei greift ein von dem Antriebsmechanismus 20 betriebenes drucksteifes Kabel 22 an den Zugspriegel an, um die Rollobahn 10 in Auf- oder Abwickelrichtung zu bewegen.

Der Zugspriegel 18 und die Spriegel 16 sind seitlich in Führungsbahnen 28 eines Profilbauteils 24 geführt, wobei auf die Enden der Spriegel 16 und 18 vorzugsweise Gleitschuhe 26 aufgebracht sind, deren Querschnitt näherungsweise dem Querschnitt der Führungsbahnen 28 entspricht. Ist zum Verfahren der Rollobahn ein drucksteifes Kabel 22 vorgesehen, so kann die Führungsbahn 28 gleichzeitig als Führungsbahn für die Gleitschuhe 26 als auch als Führungsbahn für das Kabel 22 verwendet werden. Wird die Rolloanordnung in einem Fahrzeug mit einem sowohl in Fahrzeugquer- als auch in Fahrzeuglängsrichtung nach oben gewölbten Dach benutzt, insbesondere um den Lichtdurchfall durch einen entsprechend der Dachwölbung gewölbten transparenten Deckel verändern zu können, so können die Führungsbahnen 28 zwecks Anpassung der Form der Rollobahn an die Dach- bzw. Dachdeckelform in Längsrichtung gewölbt sein. Hierbei wird die Wölbung der Rollobahn 10 umso besser an die Wölbung der Führungsbahnen 28 angeglichen, desto mehr Spriegel 16 vorgesehen sind. Bei der Wahl der Anzahl der Spriegel 16 sollte jedoch berücksichtigt werden, daß je mehr Spriegel 16 vorgesehen werden, desto mehr Raum für den Einbau der Wickelrolle 12 vorgesehen werden muß.

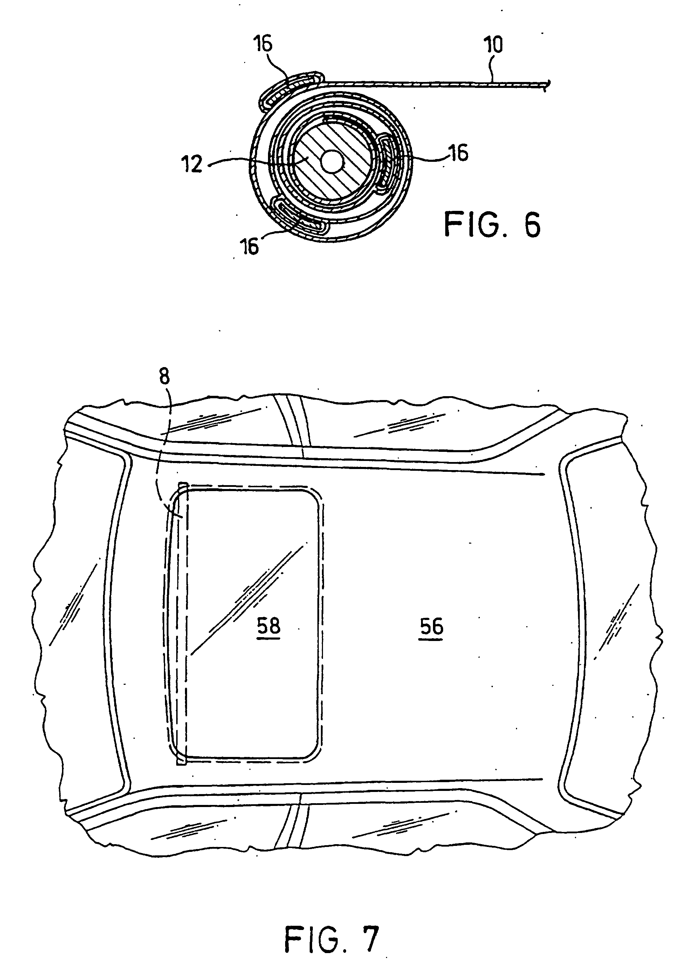

Der Durchmesser der auf die Wickelrolle 12 aufgewickelten Rollobahn 10 kann dadurch verkleinert werden, daß einerseits die Positionen der Spriegel 16 mit Bezug auf die Rollobahn 10 so gewählt werden, daß die Spriegel 16 beim Aufwickeln der Rollobahn 10 auf die Wickelrolle 12 in unterschiedlichen Umfangspositionen liegen (FIG. 6), und daß andererseits die Spriegel mit einem entsprechend der Wölbung der Wickelrolle gewölbten Querschnitt versehen werden. In Abhängigkeit von der Breite der Spriegel 16 und dem Durchmesser der Wickelrolle 12, sowie dem Durchmesser der auf die Wickelrolle 12 aufgewickelten Rollobahn 10, kann es ferner zweckmäßig sein, die Rollobahn 10 mit unterschiedlichen Spriegeln 16 zu versehen, deren jeweiliger Wölbungsradius näherungsweise dem Abstand des jeweiligen Spriegels von der Achse der Wickelrolle, gemessen im aufgewickelten Zustand der Rollobahn, entspricht.

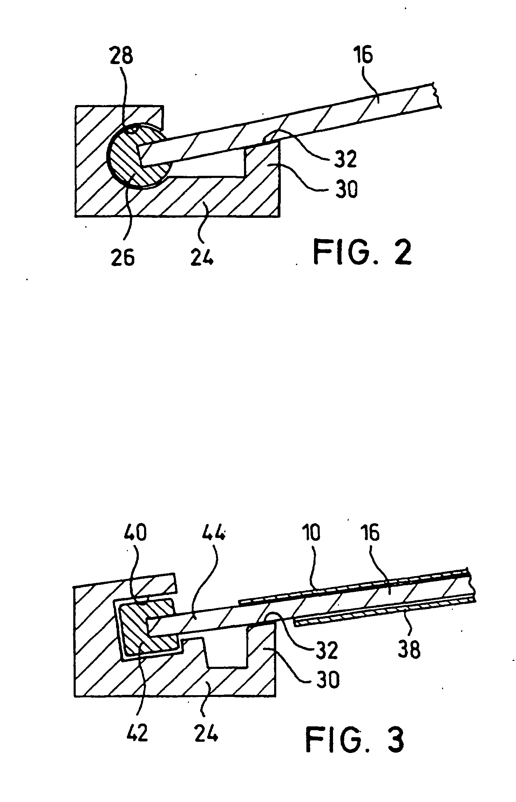

Zur Anpassung der Wölbung der Rollobahn 10 in Querrichtung dient, wie es in FIG. 1 gezeigt ist, eine Ausstellführung 30, wobei zweckmäßigerweise eine weitere Ausstellführung an dem gegenüberliegenden, in FIG. 1 nicht dargestellten Rand der Rollobahn vorgesehen ist. Die Ausstellführung 30 verläuft parallel zu der Führungsbahn 28, in welcher die Gleitschuhe 26 der Spriegel 16, 18 geführt sind. Vorzugsweise sind die Führungsbahn 28 und die Ausstellführung 30 Teil eines einstückigen Profilbauteils 24, wie dies aus der Detailansicht aus FIG. 2 ersichtlich ist.

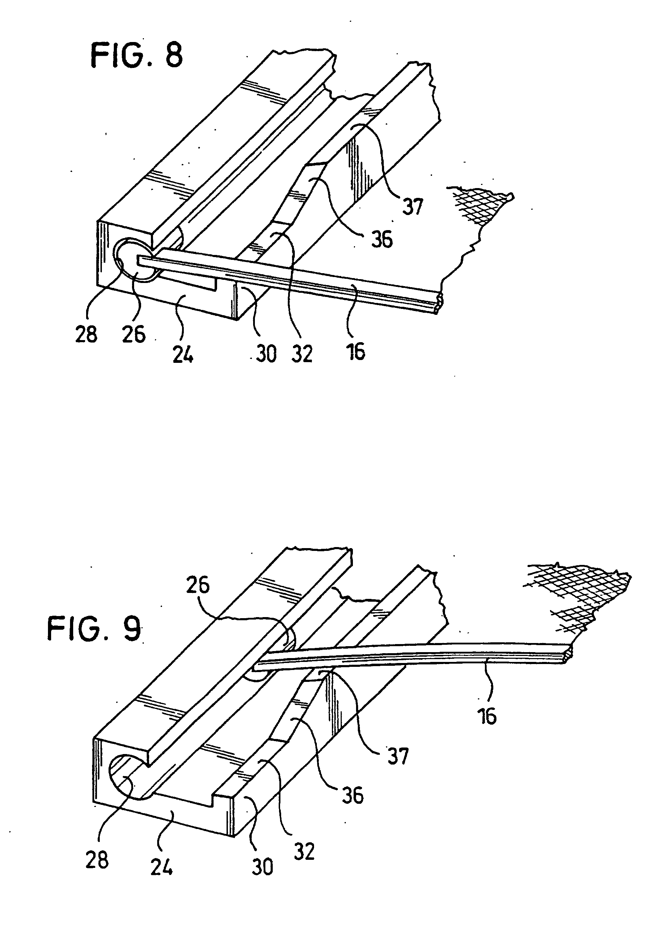

Die Ausstellführungen 30 sind so angeordnet, daß sie zwischen den Führungsbahnen 28 in Abstand zu einer quer durch die Führungsbahnen 28 verlaufenden Fläche verlaufen. Soll die Rollobahn 10 wie gezeigt nach oben gewölbt werden, so verlaufen die Ausstellführungen 30 bzw. die mit den Spriegeln 16 in Eingriff tretenden Flächen 32 derselben in Form einer ansteigenden Rampe 36 auf eine obere Führungsbahn 37, die vom Niveau höher liegt, als die Führungsbahn 28 des Gleitschuhs 26, so daß dann, wenn beim Abwickeln der Rollobahn 10 von der Wickelrolle 12 die Spriegel 16 in Eingriff mit den Ausstellführungen 30 treten, eine nach oben gerichtete Kraft auf die Unterseite der Spriegel 16 ausgeübt wird, wodurch die Spriegel 16, deren Enden mittels der in den Führungsbahnen 28 geführten Gleitschuhe 26 in vertikaler Richtung festgelegt sind und somit nicht nach oben ausweichen können, nach oben gewölbt werden (Fig. 8 und 9). Die Wölbung der Spriegel 16 und damit der Rollobahn 10 ist hierbei eine Funktion des Abstands der Führungsbahnen 28, des Abstands zwischen den Führungsbahnen 28 und den diesen benachbarten Ausstellführungen 30, sowie der Höhe der Ausstellführungen 30 mit Bezug auf die durch die Führungsbahnen 28 verlaufende Fläche.

Wie in FIG. 2 dargestellt, kann die mit den Spriegeln 16 in Eingriff tretende Fläche 32 der Ausstellführung 30 entsprechend der gewünschten Wölbung der Spriegel 16 mit Bezug auf die durch die Führungsbahnen 28 verlaufende Fläche in Querrichtung zur Rollobahn 10 geneigt sein.

Um das Einfädeln der Spriegel 16 bzw. der Gleitschuhe 26 in die Führungsbahnen 28 zu erleichtern, können wie in FIG. 1 bei 34 gezeigt die der Wickelrolle 12 zugewandten Enden der Führungsbahnen 28 aufgeweitet sein. Des weiteren weisen die Ausstellführungen 30 an ihren, der Wickelrolle 12 zugewandten, Enden vorzugsweise eine Rampe 36 auf, auf welche die Spriegel 16 beim Abwickeln der Rollobahn 10 von der Wickelrolle 12 auflaufen.

Da der Zugspriegel 18 in der Regel nicht auf die Wickelrolle 12 aufgenommen werden soll , kann dieser als starres Bauteil ausgeführt sein, wobei er dann derart vorgewölbt sein sollte, daß er nicht mit den Ausstellführungen 30 in Eingriff tritt sondern sich über diese berührungsfrei hinweg bewegt.

Die Spriegel können an der Rollobahn 10 in jeder beliebigen Art angebracht sein. Eine Art der Befestigung ist in FIG. 3 angedeutet, die eine Rollobahn 10 zeigt, die an ihrer Unterseite eine Tasche 38 aufweist, in welche ein Spriegel 16 eingeschoben ist. Es versteht sich, daß die Tasche 38 in gleicher Weise bevorzugt an der Oberseite der Rollobahn 10 angeordnet sein könnte, zumal die Oberseite vom Innenraum her nicht einsehbar ist und die Rollobahn bei dieser Variante an der Innenseite glatt ist. Die Breite der Rollobahn 10 ist hierbei so bemessen, daß sie über die Ausstellführung 30 hinausragt, so daß keine zusätzliche seitliche Verblendung zwischen dem Profilbauteil 24 und der Rollobahn 10 erforderlich ist. Die Länge der Tasche 38 ist so gewählt, daß sie einen Eingriff zwischen dem Spriegel 16 und der Eingriffsfläche 32 der Ausstellführung 30 nicht beeinträchtigt.

FIG. 3 zeigt ferner eine weitere Ausführungsform eines Profilbauteils 24. Das Profilbauteil 24 gemäß FIG. 3 weist, ähnlich wie konventionelle Führungsschienen, eine Führungsbahn 40 mit rechteckigem Querschnitt auf, in welcher ein entsprechend rechteckiger Gleitschuh 42 geführt ist. Um eine Verwölbung des Spriegel 16 zu ermöglichen muß hierbei die Führungsbahn 40 entsprechend der Winkelstellung des Spriegelendbereichs 44 zwischen der Führungsbahn 40 und der Ausstellführung 30 bezogen auf einen in FIG. 3 horizontalen Querschnitt durch das Profilbauteil 24 verkippt sein. Weist die Ausstellführung 30 eine Rampe 36 entsprechend FIG. 1 auf, so macht diese Verkippung eine Tordierung der rechteckigen Führungsbahn 40 erforderlich.

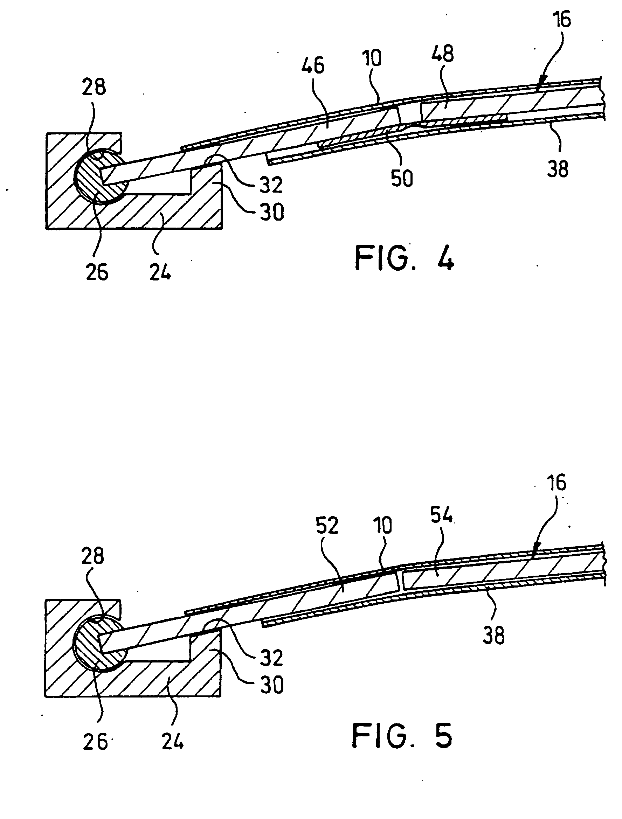

Gemäß einer weiteren Ausführungsform der vorliegend beschriebenen Rolloanordnung entsprechend FIG. 4 weisen die Spriegel 16 starre Abschnitte auf, von denen in FIG. 4 zwei Abschnitte 46 und 48 gezeigt sind, die mittels Scharnieren 50 miteinander verbunden sind. Sind die Spriegel 16 in Taschen 38 der Rollobahn 10 eingeführt, so sind die Scharniere 50 vorzugsweise als Filmscharniere ausgelegt, da diese aufgrund ihrer flachen Querschnitte das Einschieben der Spriegel in die Taschen nicht übermäßig beeinträchtigen.

Bei der in FIG. 5 gezeigten Ausführungsform weisen die Spriegel 16 wiederum starre Abschnitte auf, von denen in FIG. 5 zwei Abschnitte 52 und 54 gezeigt sind, die jedoch nicht miteinander verbunden, sondern lose in eine Tasche 38 eingesteckt sind. Der Querschnitt der Tasche 38 ist dabei so bemessen, daß sicher ausgeschlossen wird, daß die aufeinander treffenden Enden der Spriegelabschnitte 52 und 54 innerhalb der Tasche aneinander vorbei rutschen können.

Wie bereits erwähnt und wie in FIG. 7 angedeutet, läßt sich die vorliegend beschriebene Rolloanordnung 8 vorteilhaft in Fahrzeugen einsetzen, um ein in einer festen Dachfläche 56 vorgesehenes transparentes Deckelelement 58 zumindest teilweise abzudecken oder freizugeben. Das Deckelelement 58 kann hierbei ein fester Glasdeckel sein oder ein transparenter Deckel eines Schiebedaches, Schiebehebedaches, Spoilerdaches oder dergleichen. Die hier beschriebene Rolloanordnung eignet sich jedoch in gleicher Weise zum Verschließen und Freigeben von jeglichen großflächigen Öffnungen, bei welchen einerseits ein Durchhängen der Rollobahn vermieden und andererseits für eine Wölbung der Rollobahn in Querrichtung gesorgt werden soll:

### Bezugszeichenliste

- 8: Rolloanordnung
- 10: Rollobahn
- 12: Wickelrolle
- 14: Federanordnung
- 16: Spriegel
- 18: Zugspriegel
- 20: Antriebsmechanismus
- 22: Kabel
- 24: Profilbauteil
- 26: Gleitschuhe
- 28: Führungsbahn
- 30: Ausstellführung
- 32: mit 16 in Eingriff tretende Fläche
- 34: Aufweitung
- 36: Rampe
- 37: obere Führung
- 38: Tasche
- 40: rechteckige Führungsbahn
- 42: rechteckiger Gleitschuh
- 44: Spriegelendbereich
- 46, 48: Spriegelabschnitte
- 50: Scharnier
- 52, 54: Spriegelabschnitte
- 56: feste Dachfläche
- 58: Deckelelement

## Patentansprüche

1. Rolloanordnung mit einer Rollobahn (10), die von einer Wickelrolle (12) abwickelbar ist, um eine Öffnung zum Innenraum eines Fahrzeugs, insbesondere Kraftfahrzeuges, mindestens teilweise abzudecken, und die auf die Wickelrolle aufwickelbar ist, um die Öffnung zumindest teilweise freizugeben, wobei die Rollobahn in Querrichtung mit Spriegeln (16) versehen ist und an ihrem vorderen Ende einen Zugspriegel (18) aufweist, und wobei die Spriegel jeweils seitlich in Führungsbahnen (28) geführt sind und für eine Wölbung der Rollobahn in Querrichtung sorgen, **dadurch gekennzeichnet, daß** zwischen den Führungsbahnen (28) mindestens eine Ausstellführung (30) vorgesehen ist, die in Abstand zu einer quer durch die Führungsbahnen verlaufenden Fläche verläuft und so angeordnet ist, daß die Rollobahn (10) bei einem Kontakt der Spriegel (16, 18) mit der Ausstellführung in Querrichtung gewölbt wird.

2. Rolloanordnung nach Anspruch 1, **dadurch gekennzeichnet, daß** die Ausstellführung (30) im wesentlichen parallel zu der quer durch die Führungsbahnen (28) verlaufenden Fläche verläuft.

3. Rolloanordnung nach Anspruch 1 oder 2, **dadurch gekennzeichnet, daß** die Ausstellführung (30) an ihrem der Wickelrolle (12) zugewandten Ende eine Rampe (36) aufweist, auf welche die Spriegel (16, 18) beim Abwickeln der Rollobahn (10) von der Wickelrolle (12) auflaufen.

4. Rolloanordnung nach einem der vorhergehenden Ansprüche, **dadurch gekennzeichnet, daß** zwei Ausstellführungen (30) benachbart den Führungsbahnen (28) vorgesehen sind.

5. Rolloanordnung nach einem der vorhergehenden Ansprüche, **dadurch gekennzeichnet, daß** der Zugspriegel (18) derart vorgewölbt ist, daß er beim Verfahren der Rollobahn (10) nicht in Kontakt mit der Ausstellführung (30) tritt.

6. Rolloanordnung nach einem der vorhergehenden Ansprüche, **dadurch gekennzeichnet, daß** die Spriegel (16) aus einem flexiblen, federnden Werkstoff gefertigt sind.

7. Rolloanordnung nach einem der Ansprüche 1 bis 5, **dadurch gekennzeichnet, daß** die Spriegel (16) mehrere untereinander mittels eines Scharniers (50) verbundene Abschnitte (46, 48) aufweisen.

8. Rolloanordnung nach Anspruch 7, **dadurch gekennzeichnet, daß** die Scharniere (50) Filmscharniere sind.

9. Rolloanordnung nach einem der vorhergehenden Ansprüche, **dadurch gekennzeichnet, daß** die Rollobahn (10) in Querrichtung Taschen (38) aufweist, in welche die Spriegel (16) eingesteckt sind.

10. Rolloanordnung nach Anspruch 9, **dadurch gekennzeichnet, daß** die Spriegel (16) mehrere untereinander nicht verbundene Abschnitte (52, 54) aufweisen und der Querschnitt der Taschen (38) so gewählt ist, daß aufeinandertreffende Enden von einzelnen Abschnitten der Spriegel beim Verwölben der Spriegel gegeneinander anliegen.

11. Rolloanordnung nach Anspruch 10, **dadurch gekennzeichnet, daß** der Querschnitt der Taschen (38) näherungsweise dem Querschnitt der Spriegel (16) entspricht.

12. Rolloanordnung nach einem der Ansprüche 9 bis 11, **dadurch gekennzeichnet, daß** die Taschen (38) so angeordnet sind, daß sie einen Eingriff der Spriegel (16) mit den Ausstellführungen (30) nicht beeinträchtigen.

13. Rolloanordnung nach Anspruch 12, **dadurch gekennzeichnet, daß** die Breite der Rollobahn (10) so bemessen ist, daß sie die Ausstellführungen (30) überdeckt, wobei die Taschen (38) an den Treffstellen zwischen den Spriegeln (16) und den Ausstellführungen derart unterbrochen sind, daß sie einen Eingriff der Spriegel mit den Ausstellführungen nicht beeinträchtigen.

14. Rolloanordnung nach einem der vorhergehenden Ansprüche, **dadurch gekennzeichnet, daß** ein drucksteifes Kabel (22) vorgesehen ist, welches an den Zugspriegel (18) angreift, um die Rollobahn (10) zu verfahren.

15. Rolloanordnung nach einem der vorhergehenden Ansprüche, **dadurch gekennzeichnet, daß** die Enden der Spriegel (16, 18) mit Gleitschuhen (26, 42) versehen sind.

16. Rolloanordnung nach Anspruch 15, **dadurch gekennzeichnet, daß** die Gleitschuhe (26) in der Richtung quer zu den Spriegeln (16, 18) einen zylindrischen Querschnitt aufweisen.

17. Verwendung einer Rolloanordnung (8) nach einem der vorhergehenden Ansprüche für ein Fahrzeugdach (56).

18. Fahrzeugdach (56) mit einer Rolloanordnung nach einem der vorhergehenden Ansprüche 1-16, **gekennzeichnet durch** eine Führungsbahn (28), **durch** welche sich ein drucksteifes Kabel (22) erstreckt, das an den Zugspriegel (18) angreift, um die Rollobahn (10) zu verfahren.

19. Fahrzeugdach (56) nach Anspruch 18, **dadurch gekennzeichnet, daß** die Führungsbahn (28) ferner als Führungsschiene für die Spriegel (16, 18) dient

20. Fahrzeugdach (56) nach einem der Ansprüche 18 bis 19, **dadurch gekennzeichnet, daß** die Führungsbahnen (28) und die Ausstellführungen (30) Teil eines einstückigen Profilbauteils (24) sind.

21. Fahrzeugdach (56) nach einem der Ansprüche 18 bis 20, **dadurch gekennzeichnet, daß** die Führungsbahnen (28) einen zu der Wickelrolle (12) hin aufgeweiteten Bereich (34) aufweisen.

## Claims

1. Roller blind arrangement comprising a blind web (10) which can be unwound from a winding roller (12) in order at least partly to cover an opening with respect to the interior of a vehicle, in particular a motor vehicle, and which can be wound onto the winding roller in order at least partly to expose the opening, the blind web being provided in the transverse direction with arched supports (16) and having a pull-out arched support (18) at its front end, and the arched supports in each case being guided laterally in guide tracks (28) and ensuring a curvature of the blind web in the transverse direction, **characterized in that**, between the guide tracks (28) there is provided at least one opening guide (30), which runs at a distance from a surface running transversely through the guide tracks and is arranged in such a way that the blind web (10) is curved in the transverse direction when the arched supports (16, 18) make contact with the opening guide.

2. Roller blind arrangement according to Claim 1, **characterized in that** the opening guide (30) runs substantially parallel to the surface running transversely through the guide tracks (28).

3. Roller biind arrangement according to Claim 1 or 2, **characterized in that**, at its end facing the winding roller (12) the opening guide (30) has a ramp (36), onto which the arched supports (16, 18) run as the blind web (10) is unwound from the winding roller (12).

4. Roller blind arrangement according to one of the preceding claims, **characterized in that** two opening guides (30) are provided adjacent to the guide tracks (28).

5. Roller blind arrangement according to one of the preceding claims, **characterized in that** the pull-out arched support (18) is pre-curved in such a way that it does not come into contact with the opening guide (30) as the blind web (10) is moved.

6. Roller blind arrangement according to one of the preceding claims, **characterized in that** the arched supports (16) are made of a flexible, springy material.

7. Roller blind arrangement according to one of Claims 1 to 5, **characterized in that** the arched supports (16) have a plurality of sections (46, 48) connected to one another by means of a hinge (50).

8. Roller blind arrangement according to Claim 7, **characterized in that** the hinges (50) are film hinges.

9. Roller blind arrangement according to one of the preceding claims, **characterized in that** the blind web (10) has pockets (38) in the transverse direction, into which the arched supports (16) are inserted.

10. Roller blind arrangement according to Claim 9, **characterized in that** the arched supports (16) have a plurality of sections (52, 54) which are not connected to one another, and the cross section of the pockets (38) is chosen such that abutting ends of individual sections of the arched supports rest on one another when the arched supports are curved.

11. Roller blind arrangement according to Claim 10, **characterized in that** the cross section of the pockets (38) corresponds approximately to the cross section of the arched supports (16).

12. Roller blind arrangement according to one of Claims 9 to 11, **characterized in that** the pockets (38) are arranged in such a way that they do not adversely affect engagement of the arched supports (16) with the opening guides (30).

13. Roller blind arrangement according to Claim 12, **characterized in that** the width of the blind web (10) is dimensioned such that it covers the opening guides (30), the pockets (38) being interrupted at the meeting points between the arched supports (16) and the opening guides in such a way that they do not adversely affect engagement of the arched supports with the opening guides.

14. Roller blind arrangement according to one of the preceding claims, **characterized in that** a cable (22) which is stiff in compression is provided, which acts on the pull-out arched support (18) in order to move the blind web (10).

15. Roller blind arrangement according to one of the preceding claims, **characterized in that** the ends of the arched supports (16, 18) are provided with sliding shoes (26, 42).

16. Roller blind arrangement according to Claim 15, **characterized in that** the sliding shoes (26) have a cylindrical cross section in the direction transverse to the arched supports (16, 18).

17. Use of a roller blind arrangement (8) according to one of the preceding claims for a vehicle roof (56).

18. Vehicle roof (56) having a roller blind arrangement according to one of the preceding Claims 1-16, **characterized by** a guide track (28) through which there extends a cable (22) which is rigid in compression and which acts on the pull-out arched support (18) in order to move the roller blind (10).

19. Vehicle roof (56) according to Claim 18, **characterized in that** the guide track (28) further serves as a guide rail for the arched supports (16, 18).

20. Vehicle roof (56) according to either of Claims 18 and 19, **characterized in that** the guide tracks (28) and the opening guides (30) are part of a one-piece profile component.

21. Vehicle roof (56) according to one of Claims 18 to 20, **characterized in that** the guide tracks (28) have a region (34) that is widened towards the winding roller (12).

## Revendications

1. Store enroulable muni d'un rideau (10) qui peut être déroulé d'un rouleau d'enroulement (12), pour occulter au moins partiellement une ouverture débouchant dans l'espace interne d'un véhicule, notamment d'un véhicule automobile, et qui peut être enroulé sur ledit rouleau d'enroulement, pour dégager au moins partiellement ladite ouverture, le rideau du store étant muni de baleines (16) dans le sens transversal, et présentant une baleine de traction (18) à son extrémité antérieure, lesdites baleines étant respectivement guidées latéralement dans des pistes de guidage (28), et assurant un bombement du rideau du store dans le sens transversal, **caractérisé par le fait qu'**au moins un guide saillant (30), prévu entre les pistes de guidage (28), s'étend à distance d'une surface parcourant transversalement les pistes de guidage et occupe une position telle que le rideau (10) du store soit bombé transversalement lors d'un contact des baleines (16, 18) avec ledit guide saillant.

2. Store enroulable selon la revendication 1, **caractérisé par le fait que** le guide saillant (30) s'étend, pour l'essentiel, parallèlement à la surface parcourant transversalement les pistes de guidage (28).

3. Store enroulable selon la revendication 1 ou 2, **caractérisé par le fait que** le guide saillant (30) présente, à son extrémité tournée vers le rouleau d'enroulement (12), une rampe (36) sur laquelle les baleines (16, 18) montent lorsque le rideau (10) du store est déroulé dudit rouleau d'enroulement (12).

4. Store enroulable selon l'une des revendications précédentes, **caractérisé par le fait que** deux guides saillants (30) sont prévus au voisinage des pistes de guidage (28).

5. Store enroulable selon l'une des revendications précédentes, **caractérisé par le fait que** la baleine de traction (18) présente un bombement préalable tel qu'elle n'entre pas en contact avec le guide saillant (30) lors du déplacement du rideau (10) du store.

6. Store enroulable selon l'une des revendications précédentes, **caractérisé par le fait que** les baleines (16) sont fabriquées en un matériau doué de flexibilité et d'élasticité.

7. Store enroulable selon l'une des revendications 1 à 5, **caractérisé par le fait que** les baleines (16) comprennent plusieurs segments (46, 48) reliés les uns aux autres au moyen d'une charnière (50).

8. Store enroulable selon la revendication 7, **caractérisé par le fait que** les charnières (50) sont des charnières pelliculaires.

9. Store enroulable selon l'une des revendications précédentes, **caractérisé par le fait que** le rideau (10) dudit store présente, dans le sens transversal, des poches (38) dans lesquelles les baleines (16) sont emboîtées.

10. Store enroulable selon la revendication 9, **caractérisé par le fait que** les baleines (16) comprennent plusieurs segments (52, 54) non reliés les uns aux autres, et la section transversale des poches (38) est choisie de telle sorte que des extrémités de segments individuels des baleines, se rencontrant mutuellement, soient appliquées les unes contre les autres lors du bombement desdites baleines.

11. Store enroulable selon la revendication 10, **caractérisé par le fait que** la section transversale des poches (38) correspond approximativement à la section transversale des baleines (16).

12. Store enroulable selon l'une des revendications 9 à 11, **caractérisé par le fait que** les poches (38) sont disposées de façon telle qu'elles n'entravent pas une venue en prise des baleines (16) avec les guides saillants (30).

13. Store enroulable selon la revendication 12, **caractérisé par le fait que** la largeur du rideau (10) dudit store est dimensionnée de façon telle qu'il recouvre les guides saillants (30), les poches (38) étant interrompues, dans les zones de rencontre entre les baleines (16) et les guides saillants, de telle sorte qu'elles n'entravent pas une venue en prise desdites baleines avec lesdits guides saillants.

14. Store enroulable selon l'une des revendications précédentes, **caractérisé par le fait qu'**il est prévu un câble (22) rigide à la pression, qui vient en prise avec la baleine de traction (18) afin de déplacer le rideau (10) du store.

15. Store enroulable selon l'une des revendications précédentes, **caractérisé par le fait que** les extrémités des baleines (16, 18) sont munies de patins de glissement (26, 42).

16. Store enroulable selon la revendication 15, **caractérisé par le fait que** les patins de glissement (26) présentent une section transversale cylindrique dans le sens transversal vis-à-vis des baleines (16, 18).

17. Utilisation d'un store enroulable (8) selon l'une des revendications précédentes, pour un toit (56) de véhicule.

18. Toit (56) de véhicule, équipé d'un store enroulable selon l'une des revendications précédentes 1-16, **caractérisé par** une piste de guidage (28) par laquelle s'étend un câble (22) rigide à la pression, qui vient en prise avec la baleine de traction (18) afin de déplacer le rideau (10) dudit store.

19. Toit (56) de véhicule, selon la revendication 18, **caractérisé par le fait que** la piste de guidage (28) sert, en outre, de glissière de guidage destinée aux baleines (16, 18).

20. Toit (56) de véhicule, selon l'une des revendications 18 à 19, **caractérisé par le fait que** les pistes de guidage (28) et les guides saillants (30) font partie d'une pièce structurelle profilée (24) monobloc.

21. Toit (56) de véhicule, selon l'une des revendications 18 à 20, **caractérisé par le fait que** les pistes de guidage (28) possèdent une région (34) élargie en direction du rouleau d'enroulement (12).
